# EUROPÄISCHE PATENTSCHRIFT

(11) **EP 4 623 373 B1**
(45) Veröffentlichungstag und Bekanntmachung des Hinweises auf die Patenterteilung: **18.03.2026**
(21) Anmeldenummer: 25701963.8
(22) Anmeldetag: 24.01.2025
(51) Int. Cl.: G06F 21/16, G06F 21/64

(54) **COMPUTERIMPLEMENTIERTES VERFAHREN UND SYSTEM ZUR KENNZEICHNUNG VON DATEN MIT EINEM DIGITALEN WASSERZEICHEN**
COMPUTER-IMPLEMENTED METHOD AND SYSTEM FOR MARKING DATA WITH A DIGITAL WATERMARK
PROCÉDÉ ET SYSTÈME MIS EN OEUVRE PAR ORDINATEUR POUR MARQUER DES DONNÉES AVEC UN FILIGRANE NUMÉRIQUE

(30) Priorität: 29.01.2024 DE 102024000269
(43) Veröffentlichungstag der Anmeldung: 01.10.2025
(73) Patentinhaber: Mercedes-Benz Group AG, 70372 Stuttgart (DE)
(72) Erfinder: FLOHR, Fabian Oliver, 70180 Stuttgart (DE); DENNERT, Lukas, 81371 München (DE); ALBER, Luisa, 70563 Stuttgart (DE)
(74) Vertreter: Novagraaf Group
(86) Internationale Anmeldenummer: PCT/EP2025/051866
(87) Internationale Veröffentlichungsnummer: WO 2025/162841

(56) Entgegenhaltungen:
- CN-A- 110 414 194
- CN-A- 113 987 550

## Beschreibung

Die Erfindung betrifft ein computerimplementiertes Verfahren zur Kennzeichnung von Daten mit einem digitalen Wasserzeichen sowie ein hierzu geeignetes System nach der im Oberbegriff von Anspruch 9 näher definierten Art.

Es ist bekannt, Daten wie computerlesbare Dateien mit einem digitalen Wasserzeichen zu versehen, um diese eindeutig zu kennzeichnen. Dies ermöglicht es beispielsweise die Echtheit einer respektiven Datei zu überprüfen. So lässt sich nachvollziehen, ob die respektive Datei von einer autorisierten Quelle erzeugt oder durch unautorisierte Dritte verändert wurde. Dabei werden digitale Wasserzeichen typischerweise mit Hilfe von steganographischen Methoden direkt in den zu kennzeichnenden Inhalt eingebunden. Durch das Vorsehen eines digitalen Wasserzeichens darf der Inhalt einer respektiven Datei dabei jedoch nicht so stark verändert werden, dass die Datei für ihren ursprünglich vorgesehenen Zweck nicht mehr verwendet werden kann. Idealerweise sollten digitale Wasserzeichen zudem so ausgeführt sein, dass ihre Existenz in der jeweiligen Datei nicht ohne weiteres wahrnehmbar ist. Dies verhindert es, dass entsprechende digitale Wasserzeichen von Dritten unerlaubterweise aus der entsprechenden Datei entfernt werden.

Mit zunehmender Digitalisierung nimmt auch die Bedeutung von digitalen Daten zu. Beispielsweise kann ein Fahrzeughersteller Daten aggregieren, die das Nutzungsverhalten seiner Fahrzeuge beschreiben. Diese Daten können von den Fahrzeugen des Fahrzeugherstellers im Betrieb erfasst werden und auf einer zentralen Recheneinrichtung, wie einem Cloudserver, aufbereitet werden. Die so generierten Daten können beispielsweise an Dritte verkauft werden, was es Dritten erlaubt, ebenfalls fahrzeugbezogene technische Entwicklungen durchzuführen. So können beispielsweise Komponenten für Fahrzeuge und/oder fahrzeugbezogene Dienstleistungen entwickelt und optimiert werden.

Dabei besteht die Gefahr, dass ein Kunde des Fahrzeugherstellers die vom Fahrzeughersteller erworbenen Daten unerlaubterweise weiterverkauft, wodurch dem Fahrzeughersteller Einnahmen verlorengehen. Es wäre somit wünschenswert feststellen zu können, an welcher Stelle die Daten weitergegeben wurden, um dies in Zukunft zu vermeiden. Zudem können die vom Fahrzeughersteller generierten Daten manipuliert werden, was schwerwiegende Folgen haben kann. Aufgrund fehlerhafter Daten kann es beispielsweise zu einem technischen Defekt oder einer Fehlfunktion kommen, wodurch Maschinen oder Personen verletzt bzw. beschädigt werden können. Ein solcher Unfall kann auch das Einleiten von rechtlichen Schritten gegen den Fahrzeughersteller zur Folge haben. Somit ist es wünschenswert, Verfahren und Mittel bereitzustellen, mit denen es möglich ist, eine entsprechende Datenmanipulation feststellen zu können.

Übliche Verfahren zum Kennzeichnen von Daten mit digitalen Wasserzeichen sehen es beispielsweise vor, entsprechende computerlesbare Dateien durch einen künstlich generierten Inhalt, insbesondere aufweisend eine spezielle Formatierung, zu ergänzen. Diese Ergänzung bildet dann das digitale Wasserzeichen aus. Die Ergänzung, und damit auch das digitale Wasserzeichen, kann jedoch, sollte sie entdeckt werden, einfach aus dem entsprechenden Datensatz entfernt werden. Somit sollten entsprechende digitale Wasserzeichen ohne Kenntnis des entsprechenden Implementierungsschemas nach Möglichkeit nicht ohne weiteres wahrnehmbar sein.

Zudem ist es auf dem Gebiet der Softwareentwicklung bekannt, den für die eigentliche Funktionsweise relevanten Teil des Programmcodes eines Programms durch das Vorsehen irrelevanter Codebestandteile zu verschleiern. Es können auch Codebestandteile ergänzt werden, die den Programmablauf verändern, sodass irrelevante Arbeitsschritte durchgeführt werden. Dies wird auch als Obfuskation bezeichnet. Sollte ein unautorisierter Dritter den Quelltext des entsprechenden Programms auslesen, so ist der zugrundeliegende Programmcode unkenntlich bzw. für den Menschen nur schwer lesbar und verständlich. Dies erschwert ein *"reverse engineering"* des Programms.

Ein Verfahren zur Durchführung einer Obfuskation sowie ein Verfahren zur Bewertung einer entsprechend durchgeführten Obfuskation ist beispielsweise aus der WO 2007/049817 A1 bekannt. Mit Hilfe der aus der Druckschrift bekannten Verfahren wird es ermöglicht, zu bewerten, ob ein entsprechender Programmcode ausreichend verschleiert wurde. Sollte dies nicht der Fall sein, so kann eine erneute Obfuskationsiteration durchgeführt werden, wodurch die Verschleierung des Programmcodes verbessert wird. Hierzu können unterschiedliche Programmcodeabschnitte einer Obfuskation unterzogen werden und/oder unterschiedliche Obfuskationsmethoden eingesetzt werden.

Der vorliegenden Erfindung liegt die Aufgabe zugrunde, ein verbessertes computerimplementiertes Verfahren zur Kennzeichnung von Daten mit einem digitalen Wasserzeichen anzugeben, durch dessen Einsatz sich die computerlesbaren Daten zuverlässiger schützen lassen.

Erfindungsgemäß wird diese Aufgabe durch ein computerimplementiertes Verfahren zur Kennzeichnung von Daten mit einem digitalen Wasserzeichen mit den Merkmalen des Anspruchs 1 gelöst. Vorteilhafte Ausgestaltungen und Weiterbildungen sowie ein System zur Ausführung des Verfahrens ergeben sich aus den hiervon abhängigen Ansprüchen.

Ein gattungsgemäßes computerimplementiertes Verfahren zur Kennzeichnung von Daten mit einem digitalen Wasserzeichen wird erfindungsgemäß durch die folgenden von einer Recheneinheit ausgeführten Verfahrensschritte weitergebildet:
a) Bereitstellen eines initialen Datensatzes, wobei der initiale Datensatz in einem strukturierten Format vorliegt, sodass die Einträge des initialen Datensatzes im initialen Datensatz ein festgelegtes Anordnungsschema aufweisen;
b) Auslesen wenigstens eines Manipulationsschemas aus einer kommunikativ an die Recheneinheit angebundenen Wasserzeichendatenbank;
c) Aufprägen eines jeden Eintrags des initialen Datensatzes einer dem Manipulationsschema folgenden Manipulation zur Erzeugung eines gekennzeichneten Datensatzes;
d) Bereitstellen des gekennzeichneten Datensatzes zur Nutzung;
e) Empfangen eines zu prüfenden Datensatzes;
f) Bestimmen einer Übereinstimmungswahrscheinlichkeit für den zu prüfenden Datensatz in Abhängigkeit von im zu prüfenden Datensatz aufgefundenen wenigstens einem Manipulationsschema folgenden Manipulationen;
g) wenn die Übereinstimmungswahrscheinlichkeit größer ist als ein festgelegter Schwellwert: Vergleichen der Einträge des zu prüfenden Datensatzes mit einem für den zu prüfenden Datensatz ermittelten korrespondierenden gekennzeichneten Datensatzes und Ermitteln von Einträgen im zu prüfenden Datensatz, bei denen die in Schritt c) aufgeprägten Manipulationen entfernt wurden; und
h) erneutes Durchführen der Schritte a) bis g), wobei für einen Eintrag aufweisend denselben Datentyp wie ein Eintrag für den in Schritt g) festgestellt wurde, dass eine Manipulation entfernt wurde, die Recheneinheit ein anderes Manipulationsschema aus der Wasserzeichendatenbank verwendet.

Mit Hilfe des erfindungsgemäßen computerimplementierten Verfahrens zur Kennzeichnung von Daten lassen sich computerlesbare Dateien zuverlässig mit einem digitalen Wasserzeichen versehen. Durch das iterationsweise Durchführen der Verfahrensschritte a) bis g) bzw. h) werden sukzessive durch die Recheneinheit andere Manipulationsschemata zum Vorsehen entsprechender Kennzeichnungen eingesetzt, wodurch nach und nach das Identifizieren der digitalen Wasserzeichen erschwert wird. Eine Entität, die die zugrundeliegenden Manipulationsschemata nicht kennt, ist somit zunehmend weniger dazu in der Lage die entsprechenden Manipulationen aus dem gekennzeichneten Datensatz zu entfernen. Somit lässt sich der initiale Datensatz bzw. der entsprechend gekennzeichnete Datensatz immer zuverlässiger vor einer Manipulation durch unautorisierte Dritte schützen. Eine das erfindungsgemäße Verfahren ausführende Entität ist somit zuverlässig dazu in der Lage herauszufinden, ob ein von einer externen Quelle bezogener Datensatz im eigenen Hause generiert wurde, also einem entsprechenden initialen Datensatz entspricht bzw. auf einem solchen Datensatz aufbaut oder von einer sonstigen Quelle stammt.

Da jedem Eintrag des initialen Datensatzes eine entsprechende Manipulation aufgeprägt wird, ist es zuverlässig möglich, entsprechende Manipulationen auch bei einer Veränderung des gekennzeichneten Datensatzes durch unautorisierte Dritte in einem entsprechenden zu prüfenden Datensatz nachzuweisen. Werden beispielsweise einige Einträge geändert oder entfernt, so sind noch genügend weitere Einträge mit einer entsprechenden Manipulation, und damit mit einem digitalen Wasserzeichen, im zu prüfenden Datensatz vorhanden. Ein respektiver Datensatz kann neben den eigentlichen Einträgen einen Zusatzinhalt wie eine Kopfzeile, einen *"Header"* oder ähnliches aufweisen. Dieser Zusatzinhalt kann frei von Manipulationen sein oder ebenfalls entsprechend zum Kennzeichnen mit digitalen Wasserzeichen manipuliert werden. Ein einzelner Eintrag kann auch mehrfach manipuliert werden und somit mehrere digitale Wasserzeichen aufweisen. Ein Muster, mit dem die Recheneinheit den jeweiligen Einträgen Manipulationen aufprägt, bildet dabei selbst ein digitales Wasserzeichen aus.

Die Recheneinheit kann dabei den initialen Datensatz selbst generieren oder aber von einer vertrauenswürdigen Quelle, beispielsweise einem Server, auf dem mit den entsprechenden Einträgen korrespondierende Werte aggregiert werden, empfangen. Der initiale Datensatz kann dabei die unterschiedlichsten Dateiformate aufweisen bzw. annehmen. Relevant ist lediglich, dass die Einträge im initialen Datensatz das festgelegte Anordnungsschema aufweisen. Hierdurch lassen sich Einträge im jeweiligen Datensatz voneinander unterscheiden. Beispielsweise kann es sich um eine Textdatei handeln, wobei eine neue Zeile in der Textdatei mit einem neuen Eintrag korrespondiert. Die erste Zeile der Textdatei könnte dabei auch einen Zusatzinhalt darstellen. Einträge könnten beispielsweise auch durch Leerzeichen voneinander getrennt sein oder dergleichen.

Die verwendeten Manipulationsschemata sind insbesondere datentypspezifisch ausgeführt. Es können alle gängigen Datentypen berücksichtigt werden, insbesondere unter einer automatischen Erkennung der üblichen technischen Standards wie Strings, Boolean, Num, Int und dergleichen. So können beispielsweise mathematische Operationen auf Zahlenwerte angewendet werden, nicht jedoch auf eine Buchstabenaneinanderreihung.

Nach der Erzeugung des gekennzeichneten Datensatzes wird dieser zur Nutzung freigegeben. Dies bedeutet, dass Dritte den gekennzeichneten Datensatz verarbeiten und entsprechend manipulieren können. Wird eine solche Manipulation vermutet, so wird der entsprechende Datensatz der Recheneinheit als zu prüfender Datensatz zugeführt. Die Recheneinheit analysiert dann, ob im zu prüfenden Datensatz zumindest eine, einem in der Wasserzeichendatenbank vorgehaltenen Manipulationsschema entsprechende Manipulation aufgefunden werden kann. Eine solche Manipulation könnte zufälligerweise in einem entsprechenden zu prüfenden Datensatz enthalten sein. Um zweifelsfrei eine zufällige Übereinstimmung von einer tatsächlichen Manipulation eines Eintrags zu unterscheiden, bestimmt die Recheneinheit in Schritt g) die Übereinstimmungswahrscheinlichkeit und gleicht diese mit dem respektiven festgelegten Schwellwert ab. Im einfachsten Falle könnte es bereits ausreichen, wenn wenigstens eine Manipulation im zu prüfenden Datensatz aufgefunden wird. Die Übereinstimmungswahrscheinlichkeit könnte jedoch auch beispielsweise in Abhängigkeit eines Verhältnisses aus der im zu prüfenden Datensatz tatsächlich aufgefundenen Anzahl an Manipulationen zu der gemäß des Vorgehens der Recheneinheit maximal im respektiven Datensatz vorgesehenen Anzahl an Manipulationen ermittelt werden.

Ist die Übereinstimmungswahrscheinlichkeit größer als der festgelegte Schwellwert, so bedeutet dies, dass es sich bei dem zu prüfenden Datensatz um einen durch einen unautorisierten Dritten veränderten initialen Datensatz handelt bzw. der zu prüfende Datensatz Einträge enthält, die ursprünglich aus dem gekennzeichneten Datensatz entnommen wurden. Somit liegt ein Missbrauch vor. Der Schwellwert kann dabei eine geeignete Höhe aufweisen, wie 5%, 10%, 20%, 50% oder auch Bruchteile oder Vielfache hiervon. Der Schwellwert kann situationsspezifisch angepasst werden.

Ziel des erfindungsgemäßen Verfahrens ist es, die Zuverlässigkeit zu erhöhen, dass entsprechende digitale Wasserzeichen bzw. Manipulationen nicht aus dem gekennzeichneten Datensatz entfernt werden. Hierzu ermittelt die Recheneinheit den zum zu prüfenden Datensatz korrespondierenden gekennzeichneten Datensatz und ermittelt für welche Einträge die entsprechende Manipulation entfernt wurde. Das für diese Einträge bzw. diesen Datentyp verwendete Manipulationsschema ist somit entsprechenden Dritten bekannt, da diese ja dazu in der Lage sind, die entsprechenden Manipulationen aus dem gekennzeichneten Datensatz zu entfernen. Entsprechend verwendet die Recheneinheit in Schritt h) für entsprechende Einträge bzw. Datentypen ein anderes Manipulationsschema, sodass die Wahrscheinlichkeit steigt, dass dieses Manipulationsschema den unautorisierten Dritten nicht bekannt ist.

In Schritt f) überprüft die Recheneinheit bereits, welche Einträge frei sind von entsprechenden Manipulationen, und damit digitalen Wasserzeichen. Ein Eintrag in einem zu prüfenden Datensatz kann frei sein von einer Manipulation, weil entweder die Manipulation gezielt entfernt wurde, oder aber der Eintrag von dem unautorisierten Dritten selbst neu hinzugefügt wurde, ohne Kenntnis, nach welchem Manipulationsschema Manipulationen zum Kennzeichen mittels digitaler Wasserzeichen vorzusehen sind. Um zweifelsfrei nachzuweisen, dass die Manipulation entfernt wurde, sollte somit ein entsprechender Eintrag aus einem zu prüfenden Datensatz mit dem korrespondierenden Eintrag aus dem korrespondierenden gekennzeichneten Datensatz verglichen werden.

Zum Ermitteln eines korrespondierenden gekennzeichneten Datensatzes kann die Recheneinheit einen zu prüfenden Datensatz inhaltlich mit einem in einer Datenbank vorgehaltenen gekennzeichneten Datensatz abgleichen und denjenigen gekennzeichneten Datensatz als *"korrespondierend'* auswählen, welcher die höchste inhaltliche Überschneidung mit dem zu prüfenden Datensatz aufweist. Auch hier können Grenzwerte definiert werden, ab wann, trotz einer gewissen Überschneidung, dennoch keine Korrespondenz festgestellt wird, beispielsweise weil ein oder mehrere Einträge zufällig übereinstimmen. Die gekennzeichneten Datensätze können von der Recheneinheit bei deren Erzeugung in die Datenbank aufgenommen werden.

Dabei sei angemerkt, dass auch das Fehlen von Manipulationen in einem zu prüfenden Datensatz die Stärke eines Manipulationsschemas aufzeigen kann sowie die Existenz von Manipulationen auf die Schwäche eines Manipulationsschemas hindeuten kann. So gilt es, zwischen Einträgen, die im gekennzeichneten Datensatz bereits vorhanden waren, und Einträgen, die von unautorisierten Dritten ergänzt wurden, zu unterscheiden. Manipulationen, die in von Dritten selbst ergänzten Einträgen vorhanden sind, deuten darauf hin, dass der Dritte das Manipulationsschema identifiziert hat. Die Recheneinheit kann ein solches Manipulationsschema erfindungsgemäß ebenfalls wechseln. Manipulationen, die in ursprünglichen Einträgen vorhanden sind, in von Dritten ergänzten Einträgen jedoch fehlen, weisen auf ein starkes Manipulationsschema hin. Erfindungsgemäß kann die Recheneinheit den Wechsel eines solchen Manipulationsschemas für die künftige Erzeugung von gekennzeichneten Datensätzen somit unterlassen.

Eine vorteilhafte Weiterbildung des erfindungsgemäßen Verfahrens sieht dabei vor, dass die Recheneinheit zur Manipulation eines im initialen Datensatz bestehenden Eintrags den respektiven Eintrag einem Manipulationsmuster folgend ergänzt, insbesondere durch das Hinzufügen einer durch Anwendung einer mathematischen Operation auf einen durch einen Zahlenwert ausgebildeten Eintrag erhaltene Ziffer, und/oder durch das einem Manipulationsmuster folgenden Ändern wenigstens einer Formatierung des respektiven Eintrags. Somit stehen vielfältige Möglichkeiten zur Manipulation von respektiven Einträgen zur Verfügung. Umfasst der Eintrag einen Zahlenwert, so kann dieser an einer beliebigen Stelle durch eine Ziffer ergänzt werden. Diese Ziffer wird insbesondere in Abhängigkeit des nicht-manipulierten Zahlenwerts gebildet. Hierzu können die verschiedensten mathematischen Operationen auf den entsprechenden Eintrag angewendet werden. Beispielsweise kann die Ziffer durch das Bilden einer Quersumme gebildet werden. Es handelt sich bei diesem Vorgang somit um das Bilden einer sogenannten Prüfsumme oder Checksumme. Es können alle gängigen Vorgehensweisen zur Bildung von Checksummen angewendet werden.

Handelt es sich bei dem Eintrag um einen Textstring so könnte beispielsweise ein Buchstabe oder ein Sonderzeichen an einer beliebigen Stelle ergänzt werden. Beispielsweise könnte an der vierten Stelle des Textstrings ein Unterstrich eingefügt werden. Enthält der String keinerlei Zahlen, so können beispielsweise die ersten drei Buchstaben großgeschrieben werden.

Zusätzlich oder alternativ kann ein Manipulationsmuster das Ändern einer Formatierung eines Eintrags vorsehen. Beispielsweise könnte die Schriftgröße eines bestimmten Buchstabens im Eintrag, beispielsweise des ersten Buchstabens, um 1 abgesenkt oder vergrößert werden. Beispielsweise könnte die Schriftfarbe eines Zeichens an einer bestimmten Position von Schwarz zu einem sehr dunklen Grau geändert werden. Mehrere Formatierungsänderungen können auch in Kombination angewendet werden. Beispielsweise könnte bei einem in Schwarz ausgeführten Eintrag ein Unterstrich in Weiß an einer beliebigen Stelle ergänzt werden. Dies erschwert das Auffinden entsprechender Manipulationen durch einen unautorisierten Dritten noch weiter. Besonders bevorzugt sieht ein jeweiliges Manipulationsschema vor, dass entsprechende Ergänzungen bzw. Formatänderungen nach einem festgelegten Muster angewendet werden, wie beispielsweise bei jedem Eintrag oder jedem n-ten Eintrag (n gerade Zahl). Beispielsweise könnte bei einem Textstring nach den ersten vier Buchstaben alle fünf Einträge ein in weiß ausgeführter Unterstrich eingefügt werden, bei jedem sechsten Eintrag jedoch ein Leerzeichen an entsprechender Stelle eingetragen werden. Um herauszufinden, ob entsprechende Manipulationen im zu prüfenden Datensatz vorliegen, überprüft die Recheneinheit ob jeweilige Muster zum Vorsehen der Ergänzungen bzw. Formatänderungen aufgefunden werden oder nicht.

Entsprechend einer weiteren vorteilhaften Ausgestaltung des erfindungsgemäßen Verfahrens ist es ferner vorgesehen, dass die Recheneinheit zur zusätzlichen Kennzeichnung des initialen Datensatzes wenigstens einen künstlich erzeugten Eintrag im initialen Datensatz einfügt und den künstlich erzeugten Eintrag, insbesondere umfassend eine die Anordnung des künstlich erzeugten Eintrags im initialen Datensatz beschreibende Anordnungsinformation, in einer Künstliche-Einträge-Datenbank speichert; und wobei
die Recheneinheit in Schritt f) zur Ermittlung der Übereinstimmungswahrscheinlichkeit überprüft, ob im zu prüfenden Datensatz wenigstens ein in der Künstliche-Einträge-Datenbank vorgehaltener künstliche Eintrag auffindbar ist. Somit können in einem jeweiligen initialen Datensatz nicht nur bestehende Einträge ergänzt bzw. deren Formatierung geändert werden, sondern auch gänzlich neue Einträge synthetisch hergestellt und in den initialen Datensatz eingefügt werden. Ein solcher künstlich erzeugter Eintrag stellt einen besonders markanten *"Marker"* dar, um als digitales Wasserzeichen zu fungieren. Bevorzugt wird ein solcher künstlich erzeugter Eintrag erst dann generiert, wenn die bestehenden Einträge des initialen Datensatzes bereits manipuliert wurden.

Die Erzeugung des künstlich erzeugten Eintrags kann festgelegten Regeln folgen. Beispielsweise kann die Erzeugung eines künstlich erzeugten Eintrags in Abhängigkeit von den bereits im initialen Datensatz vorhandenen Einträgen ausgestaltet sein. Beispielsweise kann ein Mittelwert aus einigen oder allen im Datensatz enthaltenen Zahlen gebildet werden und dieser als künstlich erzeugter Eintrag ergänzt werden. Ebenfalls kann das künstliche Erzeugen von Einträgen einem bestimmten Muster folgen. So kann beispielsweise alle 1000 Einträge ein künstlich erzeugter Eintrag im initialen Datensatz vorgesehen werden. Durch das Ergänzen künstlich erzeugter Einträge wird ebenfalls der initiale Datensatz in einen gekennzeichneten Datensatz überführt. Im erweiterten Sinne können also entsprechende künstlich erzeugte Einträge auch in einem bereits gekennzeichneten Datensatz ergänzt werden. Ein solcher künstlich erzeugter Eintrag ist ein besonders starkes Indiz dafür, dass es sich bei dem zu prüfenden Datensatz um einen initialen Datensatz handelt bzw. der zu prüfende Datensatz auf einem solchen initialen Datensatz aufbaut. Somit kann besonders zuverlässig festgestellt werden, ob der zu prüfende Datensatz aus dem eigenen Hause stammt oder nicht.

Eine weitere vorteilhafte Ausgestaltung des erfindungsgemäßen Verfahrens sieht ferner vor, dass das strukturierte Format einer Tabelle entspricht. Mit anderen Worten sind die Einträge des initialen Datensatzes bzw. des gekennzeichneten Datensatzes dann nach Reihen und Spalten sortiert. Hierbei handelt es sich um ein besonders häufig genutztes Format, was die Relevanz zum Versehen solcher tabellarischen Informationen mit digitalen Wasserzeichen begründet.

Entsprechend einer weiteren vorteilhaften Ausgestaltung des erfindungsgemäßen Verfahrens ist es ferner vorgesehen, dass die Recheneinheit in Schritt f) die Übereinstimmungswahrscheinlichkeit erhöht, wenn:
- das Verhältnis aus der im zu prüfenden Datensatz noch vorhandenen Anzahl an Manipulationen zu den insgesamt den verwendeten Manipulationsschemata folgend den Einträgen aufprägbaren Manipulationen größer ist als 5%, ausgenommen Manipulationen in Form von Checksummen;
- das Verhältnis aus der im zu prüfenden Datensatz noch vorhandenen Anzahl an Manipulationen zu den insgesamt den verwendeten Manipulationsschemata folgend den Einträgen aufprägbaren Manipulationen größer ist als 10%, für Manipulationen in Form von Checksummen; und/oder
- im zu prüfenden Datensatz wenigstens ein künstlich erzeugter Eintrag enthalten ist.

Durch das Verändern eines entsprechenden Datensatzes durch einen unautorisierten Dritten, können Einträge so verändert werden, dass die durch Recheneinheit in Schritt c) aufgeprägten Manipulationen entfernt werden. Auch könnten durch den unautorisierten Dritten gänzlich neue Einträge in einem gekennzeichneten Datensatz ergänzt werden. Die Recheneinheit überprüft in Schritt f), ob für jeweilige Einträge im zu überprüfenden Datensatz mit jeweiligen Manipulationsschemata übereinstimmende Manipulationen aufgefunden werden können. Dabei kann die Recheneinheit auch jeweilige initiale Datensätze und/oder gekennzeichnete Datensätze in einer Datensatzdatenbank vorhalten und diese inhaltlich mit dem Inhalt eines zu überprüfenden Datensatzes abgleichen. Somit kann nicht nur das Vorhandensein bzw. Fehlen von Manipulationen im zu prüfenden Datensatz festgestellt werden, sondern auch Übereinstimmungen bzw. Abweichungen des Inhalts an sich. Je mehr Manipulationen im entsprechenden zu prüfenden Datensatz aufgefunden werden, desto höher ist auch die Übereinstimmungswahrscheinlichkeit. Dabei haben sich ein Grenzwert von 5% bzw. 10% bewährt, um zwischen tatsächlich von der Recheneinheit aufgeprägten Manipulationen und einer zufälligen Übereinstimmung zu unterscheiden. Generell wären auch andere Prozentwerte möglich.

Da es für einen unautorisierten Dritten nahezu unmöglich ist, zufällig einen durch die Recheneinheit künstlich erzeugten Eintrag selbst zu generieren, reicht bereits das Detektieren eines durch die Recheneinheit künstlich erzeugten Eintrags im zu prüfenden Datensatz, um diesen als im eigenen Hause erzeugt zu identifizieren. Die Recheneinheit kann also insbesondere eine Übereinstimmungswahrscheinlichkeit von 100% bestimmen, sollte zumindest ein besagter durch die Recheneinheit künstlich erzeugter Eintrag im zu prüfenden Datensatz aufgefunden werden. Stattdessen könnte jedoch die Übereinstimmungswahrscheinlichkeit auch lediglich erhöht werden, beispielsweise um 1%, 5%, 10% oder auch Bruchteile oder Vielfache hiervon.

Eine weitere vorteilhafte Ausgestaltung des erfindungsgemäßen Verfahrens sieht ferner vor, dass die Wasserzeichendatenbank durch ein neues Manipulationsschema ergänzt wird, wobei das neue Manipulationsschema:
- manuell durch einen Entwickler festgelegt wird;
- automatisiert durch künstliche Intelligenz festgelegt wird, insbesondere unter Berücksichtigung einer Entfernungshäufigkeit von Manipulationen in zu prüfenden Datensätzen; oder
- automatisiert durch eine stochastische Kombination vordefinierter, datentypspezifischer Manipulationsregeln festgelegt wird.

Hierdurch lässt sich verhindern, dass die in der Wasserzeichendatenbank vorgehaltenen Manipulationsschemata mit fortschreitender Zeitdauer ausgeschöpft sind. Neue Manipulationsschemata können dabei manuell durch Entwickler oder auch automatisiert festgelegt werden. So können Entwickler manuell überprüfen, welche bisher eingesetzten Manipulationsschemata besonders häufig durch unautorisierte Dritte identifiziert und neutralisiert werden und welche nicht. Dies ermöglicht es besonders zuverlässige Manipulationsschemata aufzufinden und die diesen Schemata zugrunde liegenden Manipulationsvorgänge auf die neu zu entwickelnden Manipulationsschemata zu übertragen. Dies gewährleistet, dass die neu entwickelten Manipulationsschemata ebenfalls noch zuverlässiger durch unautorisierte Dritte nicht identifiziert werden können. Bevorzugt wird für die Entwicklung besagter neuer Manipulationsschemata künstliche Intelligenz eingesetzt, was den Aufwand zur Entwicklung besagter Manipulationsschemata reduziert. Zudem sinkt hierdurch das Risiko von menschlichem Versagen. So ist künstliche Intelligenz besonders zuverlässig dazu in der Lage, Muster zu identifizieren und somit besonders schwer durch unautorisierte Dritte zu identifizierende Manipulationen abzuleiten. Es wird eine entsprechend geeignet vortrainierte künstliche Intelligenz eingesetzt.

Auch können datentypspezifische Manipulationsregeln vordefiniert werden, welche zufällig miteinander zur Ausbildung neuer Manipulationsschemata kombiniert werden können. Die datentypspezifischen Manipulationsregeln können dann beispielsweise festlegen, ob eine Manipulation das Ergänzen eines bestehenden Eintrags und/oder das Ändern eines Formats vorsehen soll. Eine datentypspezifische Manipulationsregel kann ebenfalls vorgeben, an welcher Stelle eines jeweiligen Eintrags eine entsprechende Manipulation vorgenommen werden soll. Ebenfalls kann eine datentypspezifische Manipulationsregel festlegen um welche Art von Ergänzung und/oder welche Art von Änderung des Formats es sich handeln soll. All diese datentypspezifischen Manipulationsregeln können dann beliebig zufällig miteinander kombiniert werden. Hierdurch können besonders zuverlässig und einfach neue Manipulationsschemata automatisiert erzeugt werden.

Bevorzugt wird als künstliche Intelligenz ein vortrainierter, generativer *"Transformer"* verwendet. Mit Hilfe eines solchen vortrainierten generativen Transformers ist es besonders zuverlässig möglich, für unautorisierte Dritte schwer zu identifizierende digitale Wasserzeichen vorzusehen. Durch die Analyse einer hohen Anzahl jeweiliger Kombinationen aus gekennzeichneten Datensätzen und korrespondierenden zu prüfenden Datensätzen, ist ein solcher Transformer zuverlässig dazu in der Lage, das Analysemuster eines unautorisierten Dritten anzunehmen. Der Transformer ist somit dazu in der Lage, Manipulationen in Datensätzen derartig aufzufinden, wie es auch dem unautorisierten Dritten gelingen würde. Dies ermöglicht es wiederum dem vortrainierten, generativen Transformer solche Manipulationsschemata abzuleiten, die entsprechend von besagtem unautorisierten Dritten nicht nachvollzogen werden können. Dies ermöglicht einen besonders zuverlässigen Schutz der mit einem digitalen Wasserzeichen zu kennzeichnenden Daten.

Eine weitere vorteilhafte Ausgestaltung des erfindungsgemäßen Verfahrens sieht ferner vor, dass die Recheneinheit aus einem initialen Datensatz unterschiedliche gekennzeichnete Datensätze erzeugt, wobei die Recheneinheit hierzu wenigstens einem bestimmten Eintrag durch das Anwenden verschiedener Manipulationsschemata eine abweichende Manipulation aufprägt und die Recheneinheit einen ersten gekennzeichneten Datensatz zur Nutzung einer ersten Entität und wenigstens einen weiteren gekennzeichneten Datensatz zur Nutzung wenigstens einer weiteren Entität bereitstellt. Mit anderen Worten ist die Recheneinheit dazu in der Lage, für unterschiedliche Kunden unterschiedliche gekennzeichnete Datensätze aus denselben Ausgangsdaten zu erzeugen. Wird im Schritt der Analyse eines zu prüfenden Datensatzes festgestellt, dass dieser im eigenen Hause generiert wurde, so erlaubt es dies aufgrund der im zu prüfenden Datensatz auffindbaren entitätsspezifischen Manipulationen festzustellen, von welcher Entität, also von welchem potentiellen Kunden, der zu prüfende Datensatz stammt. Somit können unzuverlässige Entitäten aufgefunden werden und geeignete Maßnahmen getroffen werden, um eine missbräuchliche Nutzung der eigenen Daten durch besagte Entität zu reduzieren oder sogar gänzlich zu vermeiden. Beispielsweise kann so gezielt nach einer Sicherheitslücke gesucht werden, die Zusammenarbeit mit einer besagten Entität eingestellt oder eingeschränkt werden und dergleichen. Auch können im eigenen Hause verschiedene Instanzen, wie beispielsweise Abteilungen, unterschiedliche Manipulationsschemata anwenden, um unterschiedliche gekennzeichnete Datensätze zu erzeugen. Dies erlaubt es mit Hilfe der digitalen Wasserzeichen den Ursprung, den Empfänger und/oder einen Verkäufer entsprechender Daten eindeutig zu identifizieren.

Bei einem System zur Kennzeichnung von Daten mit einem digitalen Wasserzeichen, umfassend eine Recheneinheit, ist erfindungsgemäß die Recheneinheit zur Ausführung eines im Vorigen beschriebenen Verfahrens eingerichtet. Das System kann lokal, beispielsweise auf einem Desktoprechner, implementiert sein oder auch verteilt in einer Cloudumgebung. Bei der Recheneinheit kann es sich entsprechend um einen Server oder Serververbund bzw. die Komponente eines Servers oder Serververbunds handeln.

Das System weist einen Zugriff auf ein computerlesbares Speichermedium auf, in dem ein Computerprogrammprodukt bevorratet ist, wiederum aufweisen computerinterpretierbare Anweisungen deren Ausführung durch einen Prozessor der Recheneinheit die Recheneinheit dazu veranlasst, ein im Vorigen beschriebenes Verfahren auszuführen.

Weitere vorteilhafte Ausgestaltungen des erfindungsgemäßen computerimplementierten Verfahrens zur Kennzeichnung von Daten mit digitalen Wasserzeichen ergeben sich auch aus den Ausführungsbeispielen, welche nachfolgend unter Bezugnahme auf die Figuren näher beschrieben werden.

Dabei zeigen:
- Fig. 1: eine schematische Darstellung einer aus dem Stand der Technik bekannten Art und Weise zum Kennzeichnen eines tabellarischen Datensatzes mit einem digitalen Wasserzeichen;
- Fig. 2: eine schematische Darstellung einer erfindungsgemäßen Art und Weise zum Kennzeichnen eines tabellarischen Datensatzes mit einem digitalen Wasserzeichen;
- Fig. 3: ein schematisches Ablaufdiagramm eines erfindungsgemäßen computerimplementierten Verfahrens zur Kennzeichnung von Daten mit digitalen Wasserzeichen; und
- Fig. 4: eine schematische Darstellung einer beispielhaften Manipulation eines Eintrags eines mit einem digitalen Wasserzeichen zu versehenden Datennetzes in Form einer Zahl.

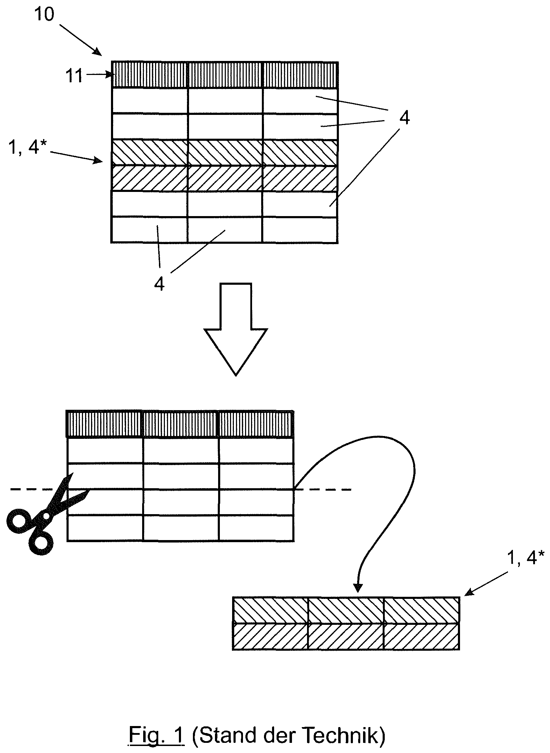

Mit Hilfe von digitalen Wasserzeichen 1 ist es möglich, die Authentizität einer computerlesbaren Datei nachzuweisen und ihre Zurückverfolgbarkeit sicherzustellen. Figur 1 zeigt hierzu als computerlesbare Datei eine beispielhafte Tabelle 10. Die Tabelle 10 umfasst neben Einträgen 4 auch eine Kopfzeile 11. Als digitales Wasserzeichen 1 kann an geeigneter Stelle in der Tabelle 10 ein künstlich erzeugter Eintrag 4* ergänzt werden, der einen bestimmten Inhalt und/oder ein bestimmtes Format aufweist. Ist der respektive künstlich erzeugte Eintrag 4* in der Tabelle 10 vorhanden, so bedeutet dies, dass die Tabelle 10 authentisch ist. Das digitale Wasserzeichen 1 wurde dabei von dem Erzeuger der Tabelle 10 in diese eingebracht. Wie Figur 1 zeigt, kann jedoch durch einen unautorisierten Dritten das digitale Wasserzeichen 1, hier also die schraffierten Zeilen, aus der Tabelle 10 entfernt werden. Somit kann die Authentizität der Datei nicht mehr festgestellt werden. Hierzu ist es notwendig, dass der unautorisierte Dritte Kenntnis darüber erlangt, welchen Inhalt bzw. welches Format das digitale Wasserzeichen 1 aufweist. Dies ist vergleichsweise einfach möglich. Zudem besteht ein hohes Risiko, dass der künstlich erzeugte Eintrag 4* durch eine durch den Dritten ohnehin angewendete Tabellenanpassung aus der Tabelle 10 entfernt wird.

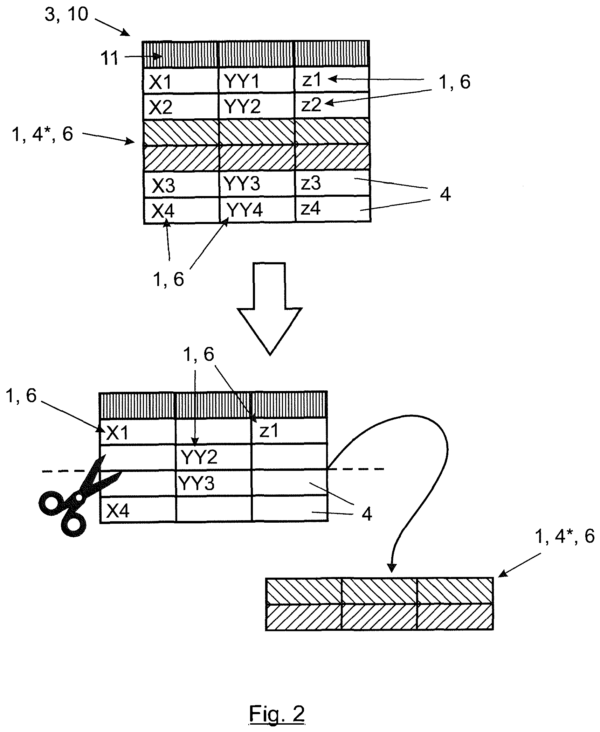

Figur 2 veranschaulicht hingegen das erfindungsgemäße Vorgehen zum Kennzeichnen computerlesbarer Dateien mit digitalen Wasserzeichen 1. Als digitales Wasserzeichen 1 werden hier nicht nur künstlich generierte Einträge 4* in einer entsprechenden Tabelle 10 ergänzt, sondern jeder Eintrag 4 eines entsprechenden initialen Datensatzes 3 wird mit einer Manipulation 6 versehen. Selbst wenn ein unautorisierter Dritter den künstlich erzeugten Eintrag 4* sowie zumindest einige der Manipulationen 6 entfernt, so sind noch genügend Manipulationen 6 vorhanden, was ein Feststellen der Authentizität des entsprechenden Datensatzes erlaubt.

Auch hier kann die Tabelle 10 bzw. der initiale Datensatz 3 eine Kopfzeile 11 aufweisen, deren Inhalt keine Manipulationen 6 aufgeprägt werden. Es wäre jedoch auch denkbar hier ebenfalls Manipulationen 6 vorzusehen.

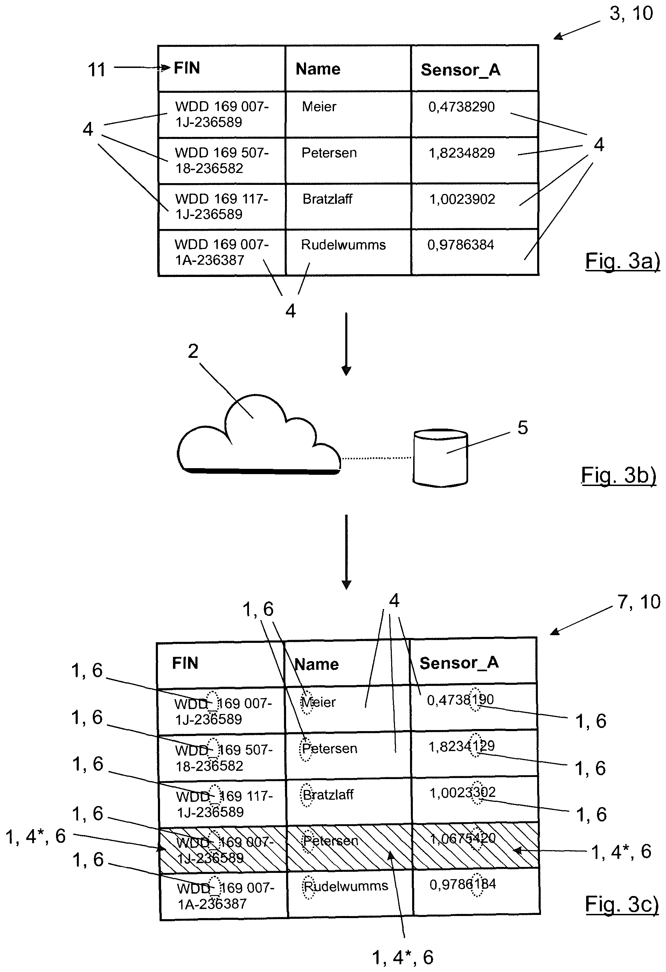

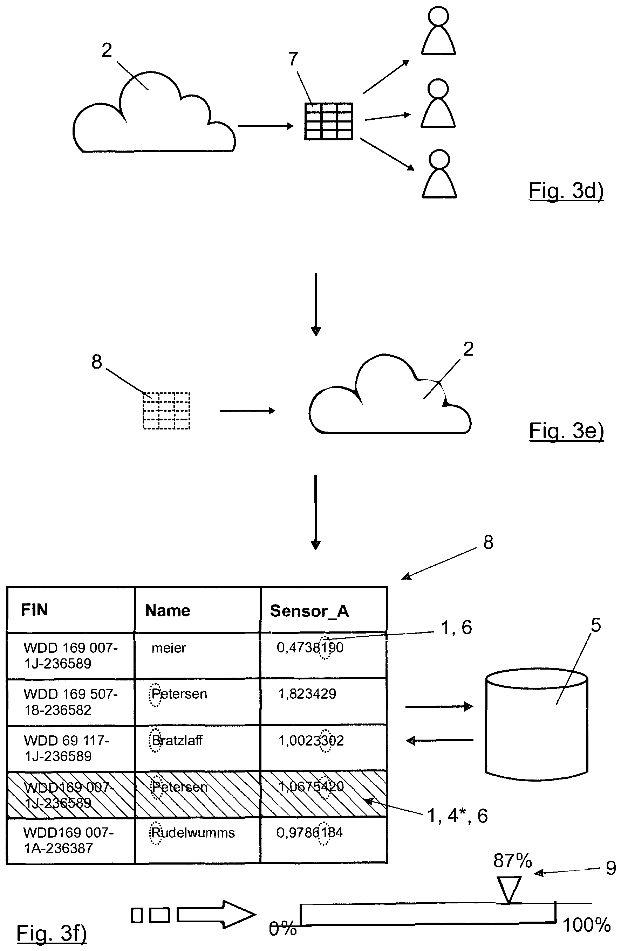

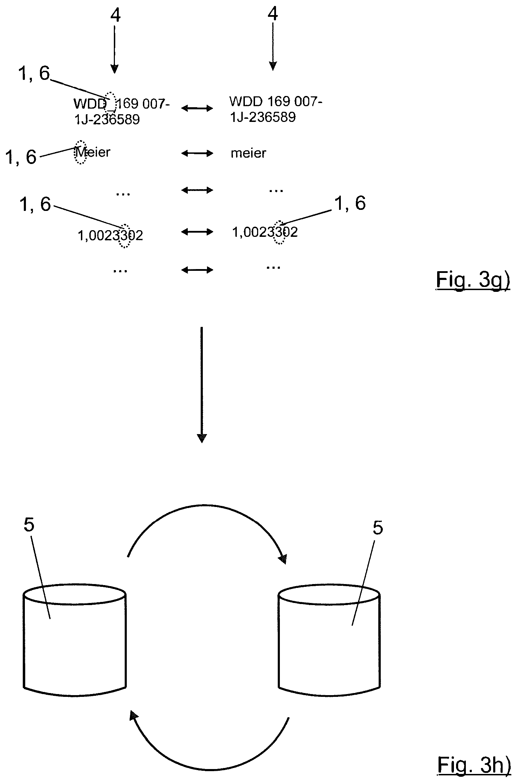

Die Manipulationen 6 sollten durch einen unautorisierten Dritten nicht erkennbar bzw. nachvollziehbar sein, da sie ansonsten zu leicht entfernt werden oder nachgeahmt werden könnten. Zudem darf durch das Vorsehen entsprechender Manipulationen 6 der jeweilige initiale Datensatz 3 nicht so sehr verändert werden, dass er für den vorgesehenen Einsatzzweck nicht mehr verwendet werden kann. Zudem müssen so viele Einträge 4 des initialen Datensatzes 3 mit einer Manipulation 6 versehen werden, dass selbst bei dem Entfernen einer hohen Anzahl der entsprechenden Manipulationen 6 dennoch zweifelsfrei die Authentizität des betrachteten Datensatzes festgestellt werden kann. Hierzu dient ein erfindungsgemäßes computerimplementiertes Verfahren zur Kennzeichnung von Daten mit einem digitalen Wasserzeichen 1, dessen Ablauf schematisch in Figur 3 dargestellt ist. Die Unterfiguren 3a) bis h) korrespondieren dabei mit den jeweiligen Verfahrensschritten.

In Schritt a) wird ein initialer Datensatz 3 bereitgestellt, hier ebenfalls in Form einer Tabelle 10. Der initiale Datensatz 3 liegt in einem strukturierten Format vor. Dies bedeutet, dass die Einträge 4 des initialen Datensatzes 3 im initialen Datensatz 3 ein festgelegtes Anordnungsschema aufweisen bzw. einem solchen folgen. Das Anordnungsschema kann festlegen, dass den Einträgen 4 eine Kopfzeile 11 vorangeht. Da es sich bei dem initialen Datensatz 3 hier um eine Tabelle 10 handelt, sieht dieses Anordnungsschema vor, dass die jeweiligen Einträge 4 nach Zeilen und Spalten geordnet sind. Die jeweiligen Einträge 4 entsprechen jeweils einem bestimmten Datentyp. Es können allen bewährten und bekannten Datentypen verwendet werden, wie beispielsweise Boolean, Byte, Decimal, Long, String, Integer, Float und dergleichen.

In Schritt b) liest eine das erfindungsgemäße Verfahren ausführende Recheneinheit 2 wenigstens ein Manipulationsschema aus einer kommunikativ an die Recheneinheit 2 angebundenen Wasserzeichendatenbank 5 aus.

In Schritt c) prägt die Recheneinheit 2 jedem Eintrag 4 des initialen Datensatzes 3 eine einem jeweiligen Manipulationsschema folgende Manipulation 6 zur Erzeugung eines gekennzeichneten Datensatzes 7 auf. Bevorzugt kombiniert die Recheneinheit 2 dabei mehrere verschiedene Manipulationsschemata. Das jeweilige Manipulationsschema ist dabei insbesondere von dem jeweiligen Datentyp eines jeweiligen Eintrags 4 abhängig. So können beispielsweise Texten unterschiedliche Manipulationen 6 aufgeprägt werden als Zahlen. Dabei bildet eine jeweilige Manipulation 6 das digitale Wasserzeichen 1 aus. Auch das Muster an Manipulationen 6 stellt selbst ein solches digitales Wasserzeichen dar.

Als Manipulation 6 kann ein jeweiliger Eintrag 4 an einer beliebigen festgelegten Stelle ergänzt werden und/oder die Formatierung eines beliebigen festgelegten Zeichens auf eine beliebige festgelegte Art und Weise verändert werden. Auch ist es möglich, dass ein künstlich erzeugter Eintrag 4* in den jeweiligen initialen Datensatz 3 zur Erzeugung eines jeweiligen gekennzeichneten Datensatzes 7 eingepflegt wird. Durch das Vorsehen entsprechender Manipulationen 6 wird besagter gekennzeichneter Datensatz 7 erzeugt. In Figur 3 ist ein solcher künstlich erzeugter Eintrag 4* durch eine Schraffur angedeutet. Es werden mehrere künstlich erzeugte Einträge 4 zur Ausbildung einer vollständigen künstlich erzeugten Zeile in der Tabelle 10 ergänzt.

Im gezeigten Ausführungsbeispiel unterscheidet sich der Datentyp der Einträge 4 zwischen den jeweiligen Spalten der Tabelle 10. Beispielsweise kann in der ersten Spalte eine Fahrzeugidentifikationsnummer (FIN) eingetragen sein, in der zweiten Spalte der Name eines jeweiligen Fahrzeugkäufers oder -halters und in der dritten Spalte ein Sensorwert. Für einen Datentyp in Form eines Strings kann beispielsweise an geeigneter Stelle ein Unterstrich als Manipulation 6 eingefügt werden. Dieser Unterstrich kann beispielsweise nach den ersten drei aufeinanderfolgenden Buchstaben ergänzt werden. Strings, die sowohl Buchstaben als auch Zahlen umfassen, können automatisch großgeschrieben werden. Für Zahlen kann zudem das Konzept des Bildens einer sogenannten Prüfsumme bzw. Checksumme angewendet werden.

Beispielsweise kann alle 1000 Reihen bzw. Zeilen ein künstlich erzeugter Eintrag 4* in die Tabelle 10 eingefügt werden. Die künstlich erzeugten Einträge 4* bzw. jeweilige initiale Datensätze 3 und/oder gekennzeichnete Datensätze 7 können vollständig oder in Teilen in einer separaten Datenbank durch die Recheneinheit 2 gespeichert werden. Dabei kann die Recheneinheit 2 optional ergänzend Metadaten speichern, wie beispielsweise einen Zeitstempel, eine Kunden-ID, die Anzahl der Zeilen und Spalten der Tabelle 10, ein Zugriffsdatum, eine Speichergröße bzw. Dateigröße und dergleichen.

Bevorzugt werden dabei künstlich erzeugte Einträge 4* erst dann generiert, wenn die sonstigen Manipulationen 6 bereits implementiert wurden. So kann das Erzeugen der künstlichen Einträge 4* von den Manipulationen 6 abhängig gemacht werden. Beispielsweise kann der häufigste Wert bzw. Modus einer jeweiligen Reihe per Zufall für Strings ausgewählt werden. Auch kann ein Durchschnittswert für jede Spalte bestimmt und auf eine jeweilige Zahl aufaddiert werden. Auch könnte ein beliebiger Tabelleneintrag ausgewählt werden der zur Erzeugung des künstlich erzeugten Eintrags 4* einfach kopiert wird.

Anschließend wird in Schritt d) der gekennzeichnete Datensatz 7 an unterschiedliche Nutzer zur Nutzung verteilt. Währenddessen kann eine unautorisierte Manipulation bzw. Einsatz der zugrunde liegenden Daten erfolgen. Beispielsweise kann ein unautorisierter Dritter die entsprechenden Daten selbst weiterverkaufen oder diese auf unerlaubte Art und Weise verändern. Dabei muss es sich nicht zwangsweise um eine solche Entität handeln, an die der jeweilige gekennzeichnete Datensatz 7 ursprünglich verteilt wurde. So könnte nämlich auch eine Sicherheitslücke bei einer solchen Entität vorliegen, woraufhin ein entsprechender gekennzeichneter Datensatz 7 entwendet werden könnte.

Zu einem späteren Zeitpunkt wird in Schritt e) ein zu prüfender Datensatz 8 der Recheneinheit 2 zugeführt. Bei dem zu prüfenden Datensatz 8 wird vermutet, dass dieser auf einem gekennzeichneten Datensatz 7 beruht, was es nun zu überprüfen gilt.

Hierzu bestimmt die Recheneinheit 2 in Schritt f) eine Übereinstimmungswahrscheinlichkeit 9 für den zu prüfenden Datensatz 8 in Abhängigkeit von im zu prüfenden Datensatz 8 aufgefundenen wenigstens einem Manipulationsschema folgenden Manipulationen 6. Hierzu greift die Recheneinheit 2 auf besagte Wasserzeichendatenbank 5 zu und überprüft, ob jeweilige Manipulationen 6 im zu prüfenden Datensatz 8 aufgefunden werden können oder nicht. Hierzu zählt auch das Überprüfen auf die Anwesenheit entsprechender künstlich erzeugter Einträge 4*.

Da es sehr unwahrscheinlich ist, dass ein unautorisierter Dritter einen solchen künstlich erzeugten Eintrag 4* selbst generiert, kann bei Existenz eines solches künstlich erzeugten Eintrags 4* in den zu prüfenden Datensatz 8 eine hohe Übereinstimmungswahrscheinlichkeit 9 ermittelt werden. Je mehr Manipulationen 6 durch die Recheneinheit 2 identifiziert werden, desto höher ist auch die Übereinstimmungswahrscheinlichkeit 9. Als Grenzwert für das Verhältnis der im zu prüfenden Datensatz 8 aufgefundenen zu den generell vorsehbaren Manipulationen 6 hat sich dabei für Manipulationen 6 in Form von Checksummen 10% und für sonstige Manipulationen 6 5% bewährt. Wurden beispielsweise 15 von einer Checksumme abweichende Manipulationen 6 vorgesehen, von denen sieben entfernt wurden, besteht eine Übereinstimmung von 8/15. Dies ist größer als 5%, sodass sehr wahrscheinlich der zu prüfende Datensatz 8 auf einem gekennzeichneten Datensatz 7 bzw. einem zugrunde liegenden initialen Datensatz 3 beruht. Beispielsweise könnten von insgesamt sechs vorgesehenen Manipulationen 6 in Form von Checksummen eine entfernt worden sein, sodass eine Übereinstimmung von 5/6 vorliegt. Dies ist ebenfalls größer als besagte 10%, sodass ein derart zu prüfende Datensatz 8 sehr wahrscheinlich aus dem eigenen Hause stammt.

Zur Berechnung der Übereinstimmungswahrscheinlichkeit 9 kann die Recheneinheit 2 die unterschiedlichsten Regeln anwenden. Beispielsweise kann für unterschiedliche Manipulationsschemata ein jeweils individueller Prozentwert festgelegt werden, wie viele der vorgenommenen Manipulationen 6 noch enthalten sein müssen. All diese Prozentwerte können gemeinsam zur Übereinstimmungswahrscheinlichkeit 9 aggregiert werden. Beispielsweise kann die Recheneinheit 2 hieraus einen Mittelwert bilden oder dergleichen. Beispielsweise kann auch eine Manipulation 6, insbesondere das Auffinden von künstlich erzeugten Einträgen 4*, als harte Randbedingung verwendet werden, sodass bei Vorliegen zumindest eines künstlich erzeugten Eintrags 4* die Übereinstimmungswahrscheinlichkeit auf 100% springen kann.

In Schritt g) vergleicht die Recheneinheit 2 für einen zu prüfenden Datensatz 8 dessen Übereinstimmungswahrscheinlichkeit 9 einen festgelegten Schwellwert übersteigt, ob entsprechende Manipulationen 6 in jeweiligen Einträgen 4 entfernt wurden. Hierzu vergleicht die Recheneinheit 2 den Inhalt des zu prüfenden Datensatzes 8 mit dem Inhalt seines korrespondierenden gekennzeichneten Datensatzes 7. In diesem Schritt kann die Recheneinheit 2 bereits im gekennzeichneten Datensatz 7 enthaltene Einträge 4 und durch unautorisierte Dritte selbst ergänzte Einträge identifizieren. Manipulationsschemata, bei denen die entsprechenden Manipulationen 6 entfernt wurden, werden dann von der Recheneinheit 2 nicht noch einmal zum Vorsehen digitaler Wasserzeichen 1 verwendet, sondern durch andere Manipulationsschemata ersetzt. Dies lässt sich auf Manipulationen 6 übertragen, welche sich in von besagten Dritten selbst erzeugten Einträgen auffinden lassen. Dabei können verschiedene Kriterien festgelegt werden, ab wann ein jeweiliges Manipulationsschema auszutauschen ist. So ist damit zu rechnen, dass nicht jeder Eintrag 4, der dem gleichen Manipulationsschema folgend manipuliert wurde, auch durch einen unautorisierten Dritten verändert wurde. So kann ein Grenzwert für eine Häufigkeit des Entfernens der Manipulation 6 des Manipulationsschemas festgelegt werden, ab deren Überschreiten das Manipulationsschema ausgetauscht wird. Werden beispielsweise 75% aller durch ein bestimmtes Manipulationsschema aufgeprägten Manipulationen 6 entdeckt und wurden diese aus dem zu prüfenden Datensatz 8 entfernt, so kann das entsprechende Manipulationsschema zu wechseln sein.

Das erfindungsgemäße Verfahren beruht auf einer iterativen Erzeugung entsprechender gekennzeichneter Datensätze 7 und Analyse der der Recheneinheit 2 zurückgeführten zu prüfenden Datensätze 8. Somit lernt die Recheneinheit 2, nach und nach immer zuverlässigere Manipulationsschemata einzusetzen, was eine zuverlässige Authentizitätsprüfung von Daten ermöglicht. Hierzu werden nach und nach neue Manipulationsschemata in der Wasserzeichendatenbank 5 ergänzt. Diese neuen Manipulationsschemata können beispielsweise händisch von einem Entwickler, automatisch von einer Kl oder auch automatisch beruhend auf einer stochastischen Kombination vordefinierter, datentypspezifischer Manipulationsregeln festgelegt werden. Dieses iterative Vorgehen ist in Figur 3h) angedeutet.

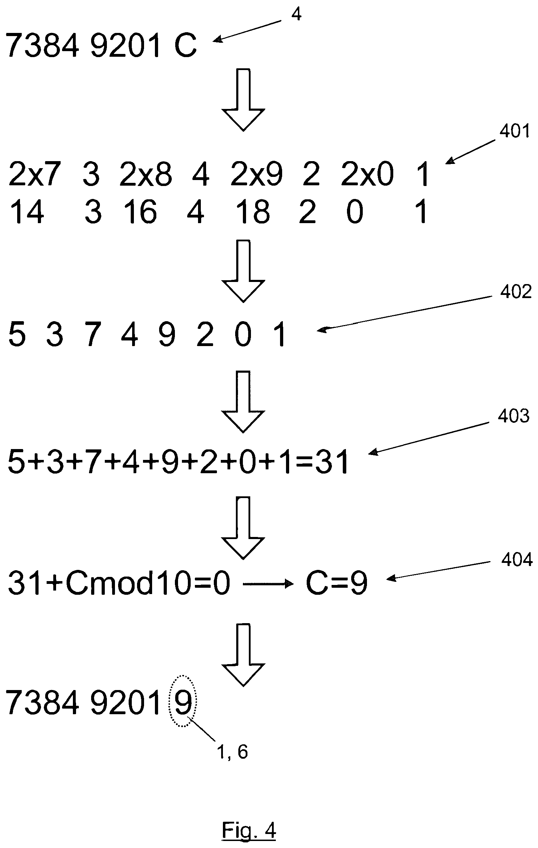

Figur 4 zeigt beispielhaft den Ablauf zum Erzeugen einer Prüfsumme als Manipulation 6. Hierzu umfasst ein jeweiliger Eintrag 4 eine Zahl bzw. Ziffernfolge. Es gilt eine geeignete Ziffer für den Buchstaben "C" aufzufinden. Im Schritt 401 wird jede Ziffer der Zahl für sich betrachtet und jede zweite Ziffer mit 2 multipliziert.

Im Schritt 402 werden Quersummen für die jeweiligen so gewonnen Zahlen bestimmt.

Nun werden alle so erhaltenen Zahlen im Schritt 403 addiert.

Der Modulo 10 des Ergebnisses soll beispielsweise 0 ergeben. Entsprechend wird in Schritt 404 für "C" 9 bestimmt.

Die Überprüfung, ob eine solche Manipulation 6 vorliegt, erfolgt auf die gleiche Art und Weise. So ermittelt die Recheneinheit 2 selbst einen Wert für "C" und vergleicht diesen mit dem Wert 9. Stimmen beide Werte überein, so bedeutet dies, dass eine entsprechend von der Recheneinheit 2 vorgesehene Manipulation 6 im zu prüfenden Datensatz 8 vorliegt. Das in Figur 4 gezeigte Ablaufschema stellt nur ein Beispiel dar. Es kommen alle möglichen weiteren Vorgehensweisen zur Berechnung von Checksummen bzw. Prüfsummen sowie zum Vorsehen jeweiliger Manipulationen 6 in Frage.

Ein das erfindungsgemäße computerimplementierte Verfahren ausführendes System ist dabei ebenfalls Teil der Erfindung.

Besonders bevorzugt generiert die Recheneinheit 2 für verschiedene Entitäten bzw. Kunden unterschiedlich gekennzeichnete Datensätze 7, was es ermöglicht, herauszufinden, wann und wo entsprechende Daten *"geleakt"* werden. Mit Hilfe des erfindungsgemäßen Verfahrens lässt sich die Echtheit eines zu prüfenden Datensatzes 8 nachvollziehen. Dank der iterativen Ausführung nutzt die Recheneinheit 2 immer zuverlässigere Manipulationsschemata.

## Patentansprüche

1. Computerimplementiertes Verfahren zur Kennzeichnung von Daten mit einem digitalen Wasserzeichen (1),
**gekennzeichnet durch**
die folgenden, von einer Recheneinheit (2) ausgeführten Verfahrensschritte:
a) Bereitstellen eines initialen Datensatzes (3), wobei der initiale Datensatz (3) in einem strukturierten Format vorliegt, sodass die Einträge (4) des initialen Datensatzes (3) im initialen Datensatz (3) ein festgelegtes Anordnungsschema aufweisen;
b) Auslesen wenigstens eines Manipulationsschemas aus einer kommunikativ an die Recheneinheit (2) angebundenen Wasserzeichendatenbank (5);
c) Aufprägen eines jeden Eintrags (4) des initialen Datensatzes (3) einer dem Manipulationsschema folgenden Manipulation (6) zur Erzeugung eines gekennzeichneten Datensatzes (7);
d) Bereitstellen des gekennzeichneten Datensatzes (7) zur Nutzung;
e) Empfangen eines zu prüfenden Datensatzes (8);
f) Bestimmen einer Übereinstimmungswahrscheinlichkeit (9) für den zu prüfenden Datensatz (8) in Abhängigkeit von im zu prüfenden Datensatz (8) aufgefundenen wenigstens einem Manipulationsschema folgenden Manipulationen (6);
g) wenn die Übereinstimmungswahrscheinlichkeit (9) größer ist als ein festgelegter Schwellwert: Vergleichen der Einträge (4) des zu prüfenden Datensatzes (8) mit einem für den zu prüfenden Datensatz (8) ermittelten korrespondierenden gekennzeichneten Datensatz (7) und Ermitteln von Einträgen (4) im zu prüfenden Datensatz (8) bei denen die in Schritt c) aufgeprägten Manipulationen (6) entfernt wurden; und
h) erneutes Durchführen der Schritte a) bis g), wobei für einen Eintrag (4) aufweisend denselben Datentyp wie ein Eintrag (4) für den in Schritt g) festgestellt wurde, dass eine Manipulation (6) entfernt wurde, die Recheneinheit (2) ein anderes Manipulationsschema aus der Wasserzeichendatenbank (5) verwendet.

2. Verfahren nach Anspruch 1,
**dadurch gekennzeichnet, dass**
die Recheneinheit (2) zur Manipulation eines im initialen Datensatz (3) bestehenden Eintrags (4) den respektiven Eintrag (4) einem Manipulationsmuster folgend ergänzt, insbesondere durch das Hinzufügen einer durch Anwendung einer mathematischen Operation auf einen durch einen Zahlenwert ausgebildeten Eintrag (4) erhaltene Ziffer, und/oder durch das einem Manipulationsmuster folgenden Ändern wenigstens einer Formatierung des respektiven Eintrags (4).

3. Verfahren nach Anspruch 1 oder 2
**dadurch gekennzeichnet, dass**
die Recheneinheit (2) zur zusätzlichen Kennzeichnung des initialen Datensatzes (3) wenigstens einen künstlich erzeugten Eintrag (4*) im initialen Datensatz (3) einfügt und den künstlich erzeugten Eintrag (4*), insbesondere umfassend eine die Anordnung des künstlich erzeugten Eintrags (4*) im initialen Datensatz (3) beschreibende Anordnungsinformation, in einer Künstliche-Einträge-Datenbank speichert; und wobei
die Recheneinheit (2) in Schritt f) zur Ermittlung der Übereinstimmungswahrscheinlichkeit (9) überprüft, ob im zu prüfenden Datensatz (8) wenigstens ein in der Künstliche-Einträge-Datenbank vorgehaltener künstliche Eintrag (4*) auffindbar ist.

4. Verfahren nach einem der Ansprüche 1 bis 3,
**dadurch gekennzeichnet, dass**
das strukturierte Format einer Tabelle (10) entspricht.

5. Verfahren nach einem der Ansprüche 1 bis 4,
**dadurch gekennzeichnet, dass**
die Recheneinheit (2) in Schritt f) die Übereinstimmungswahrscheinlichkeit (9) erhöht, wenn:
- das Verhältnis aus der im zu prüfenden Datensatz (8) noch vorhandenen Anzahl an Manipulationen (6) zu den insgesamt den verwendeten Manipulationsschemata folgend den Einträgen aufprägbaren Manipulationen (6) größer ist als 5%, ausgenommen Manipulationen (6) in Form von Checksummen;
- das Verhältnis aus der im zu prüfenden Datensatz (8) noch vorhandenen Anzahl an Manipulationen (6) zu den insgesamt den verwendeten Manipulationsschemata folgend den Einträgen aufprägbaren Manipulationen (6) größer ist als 10%, für Manipulationen (6) in Form von Checksummen; und/oder
- im zu prüfenden Datensatz (8) wenigstens ein künstlich erzeugter Eintrag (4*) enthalten ist.

6. Verfahren nach einem der Ansprüche 1 bis 5,
**dadurch gekennzeichnet, dass**
die Wasserzeichendatenbank (5) durch ein neues Manipulationsschema ergänzt wird, wobei das neue Manipulationsschema:
- manuell durch einen Entwickler festgelegt wird;
- automatisiert durch künstliche Intelligenz festgelegt wird, insbesondere unter Berücksichtigung einer Entfernungshäufigkeit von Manipulationen (6) in zu prüfenden Datensätzen (8); oder
- automatisiert durch eine stochastische Kombination vordefinierter, datentypspezifischer Manipulationsregeln festgelegt wird.

7. Verfahren nach Anspruch 6,
**dadurch gekennzeichnet, dass**
als künstliche Intelligenz ein vortrainierter, generativer Transformer verwendet wird.

8. Verfahren nach einem der Ansprüche 1 bis 7,
**dadurch gekennzeichnet, dass**
die Recheneinheit (2) aus einem initialen Datensatz (3) unterschiedliche gekennzeichnete Datensätze (7) erzeugt, wobei die Recheneinheit (2) hierzu wenigstens einem bestimmten Eintrag (4) durch das Anwenden verschiedener Manipulationsschemata eine abweichende Manipulation (6) aufprägt und die Recheneinheit (2) einen ersten gekennzeichneten Datensatz zur Nutzung einer ersten Entität und wenigstens einen weiteren gekennzeichneten Datensatz zur Nutzung wenigstens einer weiteren Entität bereitstellt.

9. System zur Kennzeichnung von Daten mit einem digitalen Wasserzeichen (1), umfassend eine Recheneinheit (2),
**dadurch gekennzeichnet, dass**
die Recheneinheit (2) zur Ausführung eines Verfahren nach einem der Ansprüche 1 bis 8 eingerichtet ist.

## Claims

1. Computer-implemented method for marking data with a digital watermark (1),
**characterized by**
the following method steps, performed by a computing unit (2):
a) providing an initial data set (3), the initial data set (3) being in a structured format such that the entries (4) of the initial data set (3) have a stipulated arrangement scheme in the initial data set (3);
b) reading at least one manipulation scheme from a watermark database (5) which is communicatively connected to the computing unit (2);
c) imposing a manipulation following the manipulation scheme (6) on each entry (4) of the initial data set (3) in order to generate a marked data set (7);
d) providing the marked data set (7) for use;
e) receiving a data set (8) to be checked;
f) determining a probability of agreement (9) for the data set (8) to be checked on the basis of manipulations (6) found in the data set (8) to be checked and following at least one manipulation scheme;
g) if the probability of agreement (9) is greater than a stipulated threshold: comparing the entries (4) of the data set (8) to be checked with a corresponding marked data set (7) identified for the data set (8) to be checked and identifying entries (4) in the data set (8) to be checked for which the manipulations (6) imposed in step c) have been removed; and
h) repeating steps a) to g), the computing unit (2) using a different manipulation scheme from the watermark database (5) for an entry (4) having the same data type as an entry (4) for which it was determined in step g) that a manipulation (6) was removed.

2. Method according to claim 1,
**characterized in that**
the computing unit (2), in order to manipulate an entry (4) existing in the initial data set (3), supplements the relevant entry (4) following a manipulation pattern, in particular by adding a digit obtained by applying a mathematical operation to an entry (4) formed by a numerical value, and/or by changing at least one formatting process of the relevant entry (4) following a manipulation pattern.

3. Method according to either claim 1 or claim 2,
**characterized in that**
the computing unit (2), in order to additionally mark the initial database (3), inserts at least one artificially generated entry (4*) into the initial data set (3) and stores the artificially generated entry (4*), in particular comprising arrangement information describing the arrangement of the artificially generated entry (4*) in the initial data set (3), in an artificial entry database,
the computing unit (2) checking, in step f), in order to identify the probability of agreement (9), whether at least one artificial entry (4*) held in the artificial entry database can be found in the data set (8) to be checked.

4. Method according to any of claims 1 to 3,
**characterized in that**
the structured format corresponds to a table (10).

5. Method according to any of claims 1 to 4,
**characterized in that**
the computing unit (2), in step f), increases the probability of agreement (9) if:
- the ratio of the number of manipulations (6) still present in the data set (8) to be checked to the total number of manipulations (6) that can be imposed on the entries following the manipulation schemes used is greater than 5%, excluding manipulations (6) in the form of checksums;
- the ratio of the number of manipulations (6) still present in the data set (8) to be checked to the total number of manipulations (6) that can be imposed on the entries following the manipulation schemes used is greater than 10%, for manipulations (6) in the form of checksums; and/or
- the data set (8) to be checked contains at least one artificially generated entry (4*).

6. Method according to any of claims 1 to 5,
**characterized in that**
the watermark database (5) is supplemented by a new manipulation scheme, the new manipulation scheme being stipulated:
- manually by a developer;
- automatically by artificial intelligence, in particular taking into account the frequency of removal of manipulations (6) in data sets (8) to be checked; or
- automatically by a stochastic combination of predefined, data type-specific manipulation rules.

7. Method according to claim 6,
**characterized in that**
a pre-trained, generative transformer is used as artificial intelligence.

8. Method according to any of claims 1 to 7,
**characterized in that**
the computing unit (2) generates differing marked data sets (7) from an initial data set (3), the computing unit (2) imposing a deviating manipulation (6) on at least one determined entry (4) by applying various manipulation schemes and the computing unit (2) providing a first marked data set for the use of a first entity and at least one further marked data set for the use of at least one further entity.

9. System for marking data with a digital watermark (1), comprising a computing unit (2),
**characterized in that**
the computing unit (2) is designed to perform a method according to any of claims 1 to 8.

## Revendications

1. Procédé implémenté par ordinateur pour la caractérisation de données avec un filigrane numérique (1),
**caractérisé par** les étapes de procédé suivantes, mises en œuvre par une unité de calcul (2) :
a) mise à disposition d'un jeu de données initial (3), dans lequel le jeu de données initial (3) est présent dans un format structuré, de sorte que les entrées (4) du jeu de données initial (3) présentent dans le jeu de données initial (3) un schéma d'agencement établi ;
b) lecture d'au moins un schéma de manipulation à partir d'une base de données de filigranes (5) reliée de manière communicative à l'unité de calcul (2) ;
c) application à chaque entrée (4) du jeu de données initial (3) d'une manipulation (6) suivant le schéma de manipulation pour la production d'un jeu de données (7) caractérisé ;
d) mise à disposition du jeu de données (7) caractérisé pour utilisation ;
e) réception d'un jeu de données (8) à vérifier ;
f) détermination d'une probabilité de concordance (9) pour le jeu de données (8) à vérifier en fonction de manipulations (6) suivant au moins un schéma de manipulation trouvées dans le jeu de données (8) à vérifier ;
g) lorsque la probabilité de concordance (9) est supérieure à une valeur seuil établie : comparaison des entrées (4) du jeu de données (8) à vérifier avec un jeu de données (7) caractérisé correspondant fixé pour le jeu de données (8) à vérifier et fixation d'entrées (4) dans le jeu de données (8) à vérifier pour lesquelles les manipulations (6) appliquées à l'étape c) ont été supprimées ; et
h) réalisation à nouveau des étapes a) à g), dans lequel, pour une entrée (4) présentant le même type de données qu'une entrée (4) pour laquelle il a été établi à l'étape g) qu'une manipulation (6) a été supprimée, l'unité de calcul (2) utilise un autre schéma de manipulation provenant de la base de données de filigranes (5).

2. Procédé selon la revendication 1,
**caractérisé en ce que**
l'unité de calcul (2) complète, pour la manipulation d'une entrée (4) existant dans le jeu de données initial (3), l'entrée (4) respective en suivant un modèle de manipulation, en particulier par l'ajout d'un chiffre obtenu par l'exécution d'une opération mathématique sur une entrée (4) formée par une valeur numérique, et/ou par la modification d'au moins un formatage de l'entrée (4) respective en suivant un modèle de manipulation.

3. Procédé selon la revendication 1 ou 2
**caractérisé en ce que**
l'unité de calcul (2) insère, pour la caractérisation supplémentaire du jeu de données initial (3), au moins une entrée (4*) générée artificiellement dans le jeu de données initial (3) et mémorise l'entrée (4*) générée artificiellement, comprenant en particulier une information d'agencement décrivant l'agencement de l'entrée (4*) générée artificiellement dans le jeu de données initial (3), dans une base de données d'entrées artificielles ; et dans lequel l'unité de calcul (2) vérifie à l'étape f), pour fixer la probabilité de concordance (9), si au moins une entrée artificielle (4*) conservée dans la base de données d'entrées artificielles peut être trouvée dans le jeu de données (8) à vérifier.

4. Procédé selon l'une des revendications 1 à 3,
**caractérisé en ce que**
le format structuré correspond à un tableau (10).

5. Procédé selon l'une des revendications 1 à 4,
**caractérisé en ce que**
l'unité de calcul (2) augmente la probabilité de concordance (9) à l'étape f) lorsque :
- le rapport entre le nombre de manipulations (6) encore présentes dans le jeu de données (8) à vérifier et le nombre total de manipulations (6) pouvant être appliquées sur les entrées suivant les schémas de manipulation utilisés est supérieur à 5 %, à l'exception des manipulations (6) sous forme de sommes de contrôle ;
- le rapport entre le nombre de manipulations (6) encore présentes dans le jeu de données (8) à vérifier et le nombre total de manipulations (6) pouvant être appliquées sur les entrées suivant les schémas de manipulation utilisés est supérieur à 10 %, pour des manipulations (6) sous forme de sommes de contrôle ; et/ou
- le jeu de données (8) à vérifier contient au moins une entrée (4*) générée artificiellement.

6. Procédé selon l'une des revendications 1 à 5,
**caractérisé en ce que**
la base de données de filigranes (5) est complétée par un nouveau schéma de manipulation, dans lequel le nouveau schéma de manipulation :
- est établi manuellement par un développeur ;
- est établi de manière automatisée par une intelligence artificielle, en particulier en tenant compte d'une fréquence de suppression des manipulations (6) dans les jeux de données (8) à vérifier ; ou
- est établie de manière automatisée par une combinaison stochastique de règles de manipulation prédéfinies et spécifiques au type de données.

7. Procédé selon la revendication 6,
**caractérisé en ce que**
un transformateur génératif pré-entraîné est utilisé comme intelligence artificielle.

8. Procédé selon l'une des revendications 1 à 7,
**caractérisé en ce que**
l'unité de calcul (2) génère à partir d'un jeu de données initial (3) différents jeux de données (7) caractérisés, dans lequel l'unité de calcul (2) applique à cet effet une manipulation (6) différente à au moins une entrée (4) déterminée par l'exécution de différents schémas de manipulation et l'unité de calcul (2) met à disposition un premier jeu de données caractérisé pour l'utilisation d'une première entité et au moins un autre jeu de données caractérisé pour l'utilisation d'au moins une autre entité.

9. Système de caractérisation de données avec un filigrane numérique (1), comprenant une unité de calcul (2),
**caractérisé en ce que**
l'unité de calcul (2) est configurée pour la mise en œuvre d'un procédé selon l'une des revendications 1 à 8.
